(19) Europäisches Patentamt
European Patent Office
Office européen des brevets

(11) EP 4 324 870 A1

(12) # EUROPEAN PATENT APPLICATION

published in accordance with Art. 153(4) EPC

(43) Date of publication:
**21.02.2024 Bulletin 2024/08**

(21) Application number: **21950296.0**

(22) Date of filing: **24.12.2021**

(51) International Patent Classification (IPC):
***C08J 5/18*** *(2006.01)* ***C08L 79/08*** *(2006.01)*
***C08G 73/14*** *(2006.01)* ***C08G 73/10*** *(2006.01)*
***G02B 1/04*** *(2006.01)*

(52) Cooperative Patent Classification (CPC):
**C08G 73/10; C08G 73/14; C08J 5/18; C08L 79/08; G02B 1/04**

(86) International application number:
**PCT/KR2021/019823**

(87) International publication number:
**WO 2023/286954 (19.01.2023 Gazette 2023/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.07.2021 KR 20210092397**
**23.12.2021 KR 20210186219**

(71) Applicant: **Kolon Industries, Inc.**
**Seoul 07793 (KR)**

(72) Inventors:
- **JUNG, Hak-Gee**
  **Seoul 07793 (KR)**
- **PARK, Hyo Jun**
  **Seoul 07793 (KR)**

(74) Representative: **Ter Meer Steinmeister & Partner Patentanwälte mbB**
**Nymphenburger Straße 4**
**80335 München (DE)**

(54) **OPTICAL FILM HAVING EXCELLENT FOLDING PERFORMANCE AND DISPLAY DEVICE COMPRISING SAME**

(57) The present invention provides: an optical film comprising a polymer resin and having the yellowness index of 3.0 or less and the folding performance parameter of 1.5 GPa or less; and a display device comprising the optical film.

EP 4 324 870 A1

FIG. 1

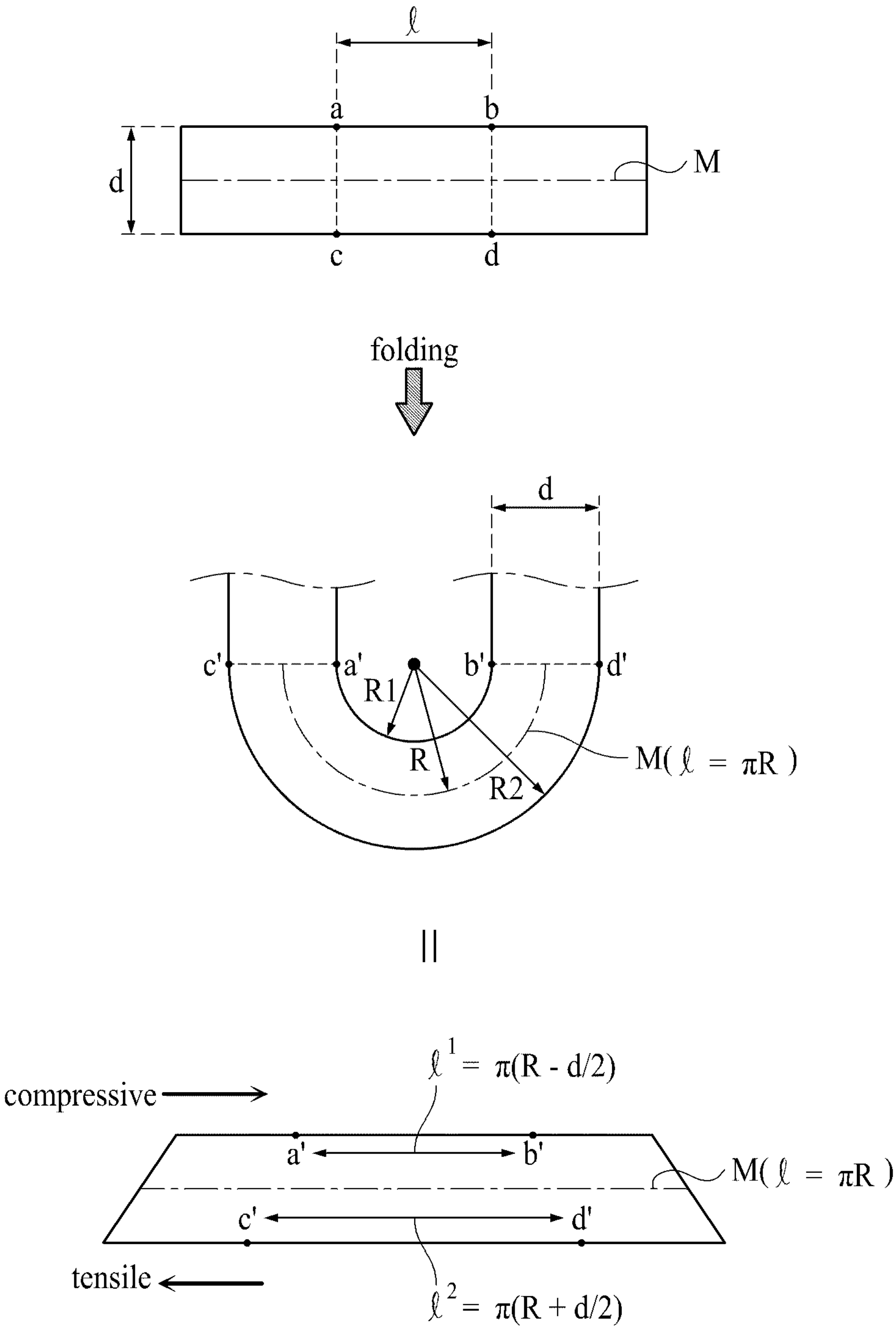
ℓ
a
b
d
M
c
d
folding
d
c'
a'
b'
d'
R1
R
R2
M( ℓ = πR )
||
ℓ 1 = π(R - d/2)
compressive
a'
b'
M( ℓ = πR )
c'
d'
tensile
ℓ 2 = π(R + d/2)

## Description

[Technical Field]

The present disclosure relates to an optical film containing a polymer resin having excellent restoring force after folding, and a display device including the same.

[Background Art]

Recently, the use of an optical film instead of glass as a cover window of a display device has been considered with the goal of reducing the thickness and weight of the display device and increasing the flexibility thereof. In order for the optical film to be usable as a cover window of a display device, the optical film needs to have excellent optical and mechanical properties as well as superior restoring force after being folded.

Therefore, it is necessary to develop a film that exhibits excellent optical properties as well as superior mechanical properties, such as insolubility, chemical resistance, heat resistance, radiation resistance, low-temperature characteristics and restoring force after folding.

Among optical films, polyimide(PI)-based resins have excellent insolubility, chemical resistance, heat resistance, radiation resistance and low-temperature characteristics, and are used as automobile materials, aviation materials, spacecraft materials, insulating coatings, insulating films, protective films, and the like.

Recently, polyamide-imide-based resins having amide repeating units added to polyimide-based resins have been developed, and films prepared using polyamide-imide-based resins have superior optical properties and excellent mechanical properties such as excellent insolubility, chemical resistance, heat resistance, radiation resistance, and low-temperature characteristics as well as restoring force after folding.

Amide repeating units may be prepared through polymerization of a diamine-based compound and a dicarbonyl-based compound. However, for example, 2,2'-bis(trifluoromethyl)benzidine (TFDB), when used as the diamine, causes a problem in which, during polymerization of TFDB with the dicarbonyl-based compound, the dicarbonyl-based compound is gelled due to the rigid structure of TFDB, so the polymerization reaction is insufficient.

Therefore, there is a need to develop a polyamide-imide-based resin having a high degree of polymerization even when a dicarbonyl-based compound is added.

[Disclosure]

[Technical Problem]

It is an aspect of the present disclosure to provide an optical film that contains a polymer resin having excellent restoring force after folding.

It is another aspect of the present disclosure to provide an optical film that exhibits excellent optical properties as well as mechanical properties.

[Technical Solution]

In accordance with the present disclosure, the above and other objects can be accomplished by the provision of an optical film containing a polymer resin and having a yellowness index of 3.0 or less and a parameter of restoring force after folding, calculated using the following Equation 1, of 1.5 GPa or less:

[Equation 1]

$$\text{Parameter of restoring force after folding} = \frac{E' * d}{\{(1000 * R) + \frac{d}{2}\}}$$

wherein R is 0.5 mm, which is a radius of curvature of the optical film in a centerline of a fold when folded, d is a thickness of the optical film, which is expressed as μm, and E' is an elastic strain index calculated using the following Equation 2, wherein only numbers, excluding units, are applied to the radius of curvature and thickness in Equation 1,

[Equation 2]

$$\text{Elastic strain index } (E') = E/(1-v^2)$$

wherein E is a modulus of the optical film, expressed as GPa, and v is a Poisson's ratio of the optical film.

The elastic strain index (E') calculated using Equation 2 may be 5.5 or more.

The polymer resin may include an imide repeating unit and an amide repeating unit.

The amide repeating unit may be present in an amount of 80% or more of a total number of the imide repeating unit and the amide repeating unit.

The imide repeating unit may include a first repeating unit and a second repeating unit.

The amide repeating unit may include a third repeating unit and a fourth repeating unit.

The first repeating unit may be an imide repeating unit formed by polymerization of a first diamine-based compound and a first dianhydride-based compound, and the second repeating unit may be an imide repeating unit formed by polymerization of a second diamine-based compound and a second dianhydride-based compound.

The third repeating unit may be an amide repeating unit formed by polymerization of the first diamine-based compound and a first dicarbonyl-based compound, and the fourth repeating unit may be an amide repeating unit formed by polymerization of a second diamine-based compound and a second dicarbonyl-based compound.

The first diamine-based compound may be 2,2'-bis(trifluoromethyl)benzidine (TFDB).

The second diamine-based compound may include at least one functional group selected from the group consisting of sulfonyl, carbonyl, methylene, propylene, and halogens.

The second diamine-based compound may include at least one selected from the group consisting of bis(3-aminophenyl)sulfone (3DDS), bis(4-aminophenyl)sulfone (4DDS), 2,2-bis(3-aminophenyl)hexafluoropropane (3,3'-6F), 2,2-bis(4-aminophenyl)hexafluoropropane (4,4'-6F), 4,4'-methylenedianiline (MDA), 3,3'-diaminobenzophenone, 4,4'-diaminobenzophenone, and tetrachloride benzidine (CIBZ).

A molar ratio of the polymerized first diamine-based compound and the polymerized second diamine-based compound may be 95:5 to 50:50.

The polymer resin may have a weight average molecular weight (Mw) of 200,000 to 500,000.

In accordance with another aspect of the present disclosure, there is provided a display device including a display panel, and the optical film according to the present disclosure disposed on the display panel.

[Advantageous Effects]

An embodiment of the present disclosure provides an optical film containing a polymer resin having excellent restoring force after folding.

The optical film according to another embodiment of the present disclosure exhibits excellent optical and mechanical properties and thus is capable of effectively protecting the display surface of a display device when used as a cover window of the display device.

[Description of Drawings]

FIG. 1 is a cross-sectional view of an optical film showing a change in length when folded;
FIG. 2 is a cross-sectional view illustrating a part of a display device according to an embodiment of the present disclosure; and
FIG. 3 is an enlarged cross-sectional view illustrating "P" of FIG. 2.

[Best Mode]

Hereinafter, embodiments of the present disclosure will be described in detail with reference to the accompanying drawings. However, the following embodiments are illustratively provided merely for clear understanding of the present disclosure, and do not limit the scope of the present disclosure.

The shapes, sizes, ratios, angles, and numbers disclosed in the drawings for describing embodiments of the present disclosure are merely examples, and the present disclosure is not limited to the illustrated details. Like reference numerals refer to like elements throughout the present specification. In the following description, when a detailed description of relevant known functions or configurations is determined to unnecessarily obscure important points of the present disclosure, the detailed description will be omitted.

In the case in which the term such as "comprise", "have", or "include" is used in the present specification, another part may also be present, unless "only" is used. Terms in a singular form may include the plural meanings, unless noted to the contrary. Also, in construing an element, the element is to be construed as including an error range even if there is no explicit description thereof.

In describing a positional relationship, for example, when the positional relationship is described as "on", "above", "below", or "next", the case of no contact therebetween may be included, unless "just" or "directly" is used.

Spatially relative terms, such as "below", "beneath", "lower", "above", and "upper", may be used herein to describe the relationship between a device or element and another device or element, as shown in the figures. It will be understood that spatially relative terms are intended to encompass different orientations of a device during the use or operation of the device, in addition to the orientation depicted in the figures. For example, if a device in one of the figures is turned upside down, elements described as "below" or "beneath" other elements would then be positioned "above" the other elements. The exemplary term "below" or "beneath" can, therefore, encompass the meanings of both "below" and "above". In the same manner, the exemplary term "above" or "upper" can encompass the meanings of both "above" and "below".

In describing temporal relationships, for example, when a temporal order is described using "after", "subsequent", "next", or "before", the case of a non-continuous relationship may be included, unless "just" or "directly" is used.

It will be understood that, although the terms "first", "second", etc. may be used herein to describe various elements, these elements are not limited by these terms. These terms are only used to distinguish one element from another. Therefore, a first element could be termed a second element within the technical idea of the present disclosure.

It should be understood that the term "at least one" includes all combinations related with one or more items. For example, "at least one among a first element, a second element, and a third element" may include all combinations of two or more elements selected from among the first, second, and third elements, as well as each of the first, second, and third elements.

Features of various embodiments of the present disclosure may be partially or completely coupled to or combined with each other, and may be variously interoperated with each other and driven technically. The embodiments of the present disclosure may be carried out independently from each other, or may be carried out together in an interrelated manner.

An embodiment of the present disclosure provides an optical film. The optical film according to the embodiment of the present disclosure contains a polymer resin.

The polymer resin may be contained in the film in any one of various shapes and forms, for example, as a solid powder, in the state of being dissolved in a solution, or as a matrix solidified after having been dissolved in a solution. Any resin may be considered as the same as the polymer resin of the present disclosure, regardless of the shape and form thereof, as long as it is a resin containing the same repeating unit as in the present disclosure. In general, the polymer resin may exist in the film in the form of a matrix, obtained by applying a polymer resin solution and drying the same to form a solid.

According to an embodiment of the present disclosure, an optical film has a parameter of restoring force after folding, calculated using the following Equation 1, of 1.5 GPa or less:

[Equation 1]

$$\text{Parameter of restoring force after folding} = \frac{E' * d}{\{(1000 * R) + \frac{d}{2}\}}$$

wherein R is 0.5 mm, which is the radius of curvature of the optical film in the centerline of the fold when folded, d is the thickness of the optical film, which is expressed as $\mu$m, and E' is the elastic strain index, calculated using the following Equation 2, wherein the thickness of the optical film may be measured using an electronic micrometer, for example, an electronic micrometer from Anritsu Corporation, and the radius of curvature of the optical film is measured by determining the gap between inner folded parts after folding, using a gap gauge in a bending test machine, for example, DLDM111LHA from YUASA, and in Equation 1, only numbers, excluding units, are applied to the radius of curvature and thickness,

[Equation 2]

$$\text{Elastic strain index } (E') = E/(1-v^2)$$

wherein E is the modulus of the optical film, expressed as GPa, and v is the Poisson's ratio of the optical film.

The modulus of the optical film may be measured under the following conditions using a universal testing machine (e.g., from Instron Corp.) in accordance with the ASTM D882 standard.

- 25°C/50RH%
- Load Cell: 30 KN, Grip: 250 N.
- Specimen size: 10 X 50 mm, tensile speed: 25 mm/min

The Poisson's ratio of the optical film is the ratio of a lateral strain to an axial strain of a specimen to which an axial load is applied, and may be measured using a non-contact (video extensometer) method in accordance with the ASTM E-132 standard. Specifically, the Poisson's ratio can be measured under the following conditions using a universal testing machine (e.g., an Instron 3367 from Instron Corp.).

- Test speed: 10 mm/min
- $(25\pm2)$°C/$(45\pm5)$%RH

The parameter of restoring force after folding of the present disclosure will be described in more detail with reference to the drawings. FIG. 1 is a cross-sectional view of an optical film showing a change in length when the optical film is folded. FIG. 1 illustrates only one example for showing a change in length when the optical film is folded, and the change in length when folded may be different for each optical film. Accordingly, the present disclosure is not limited with regard thereto.

When the parameter of restoring force after folding of the optical film is 1.5 GPa or less, the resistance generated when folded decreases and thus excellent restoring force after folding can be achieved, and no folding traces may be formed. As the radius of curvature (R) decreases, the occurrence of folding traces increases. When the parameter of restoring force after folding is 1.5 GPa or less, restoring force after folding is excellent, and thus no folding traces occur. In particular, the radius of curvature (R) in the parameter of restoring force after folding is 0.5 mm. When the parameter of restoring force after folding is 1.5 GPa or less, the radius of curvature (R) is 0.5 mm, no folding traces are formed and excellent restoring force after folding can be achieved.

Specifically, when the optical film is folded, a mechanical change in the film may occur. As used herein, the term "folding traces", for example, refers to a phenomenon in which the film is bent, has an uneven wrinkled surface, or, in the case of a transparent film, develops white turbidity. Also, in addition to the occurrence of wrinkles or turbidity, before and after folding, a change in length of the optical film, as well as changes in the mechanical and optical properties of the optical film, such as a change in light transmittance, may occur.

When the optical film is folded, stress is applied to the film. At this time, compressive stress is applied along the folding direction to the inner surface (hereinafter referred to as the "inner diameter") of the fold of the optical film, and tensile stress is applied to the outer surface thereof (hereinafter referred to as the "outer diameter"), which is the surface opposite thereto. Accordingly, compressive strain occurs in the inner diameter of the optical film, and tensile strain occurs in the outer diameter of the optical film.

Specifically, as shown in FIG. 1, before folding, the distance between the two points (a and b) on the inner diameter of the fold is equal to the distance between the two points (c, d) on the outer diameter of the fold. However, when the optical film is folded, a and b, the two points on the inner diameter of the optical film, are converted into a' and b' by the compressive stress during folding, and c and d, the two points on the outer diameter, are converted into c' and d' by the tensile stress during folding. Due to the compressive stress on the inner diameter of the fold, the distance between a' and b' becomes shorter than the distance between a and b, and the distance between c' and d' on the outer diameter of the fold becomes longer than the distance between c and d. At this time, the radius of curvature (R1) of the inner diameter of the fold is "R-d/2" based on the center line (M) of the optical film, and the radius of curvature (R2) of the outer diameter of the fold is "R+d/2" based on the center line (M) of the optical film. The distance $L^1$ between a' and b' and the distance $L^2$ between c' and d', which are calculated based on the radius of curvature of the inner diameter and the outer diameter of the fold, are $\pi$(R-d/2), and $\pi$(R+d/2), respectively.

Compressive stress and tensile stress are proportional to the magnitude of the length change. The length change of the outer diameter is +$\pi$(d/2), and the length change of the inner diameter is -$\pi$(d/2). Therefore, the stress applied to the inner diameter is proportional to d/2R(=[n(d/2)]/nR), and the stress applied to the outer diameter is proportional to d/2R. As the stress applied to the outer and inner diameters decreases, the restoring force after folding of the optical film improves. Therefore, a lower value of d/2R of the optical film is advantageous for folding. Specifically, when d/2R is 0.08 or less, the optical film exhibits excellent restoring force after folding and thus leaves no folding traces, and when d/2R exceeds 0.08, excessive pressure is applied during folding and folding traces may be left after folding.

In addition, the parameter of restoring force after folding of the optical film is proportional to the elastic strain index (E'). As the elastic strain index (E') increases, the restoring force after folding of the optical film improves, and as the elastic strain index (E') decreases, the restoring force after folding of the optical film deteriorates.

According to an embodiment of the present disclosure, the optical film may have an elastic strain index (E'), calculated using Equation 2, of 5.5 GPa or more. The restoring force after folding of the optical film can be improved by controlling the thickness and radius of curvature of the optical film, as well as the modulus and Poisson's ratio thereof. As the modulus and Poisson's ratio of the optical film increase, the resistance to strain (deformation) of the optical film during folding increases. For example, even if the thickness of the optical film increases, when the modulus of the optical film increases, restoring force after folding improves. On the other hand, even if the thickness of the optical film decreases, when the modulus of the optical film also decreases, restoring force after folding deteriorates, so the optical film is unsuitable for use as a cover window of a flexible display device. Further, if the Poisson's ratio of the optical film increases, restoring force after folding improves, and conversely, when the Poisson's ratio of the optical film decreases, restoring force after folding deteriorates.

According to an embodiment of the present disclosure, the optical film may have a yellowness index (Y.I.) of 3.0 or less. The yellowness index may be measured in accordance with the ASTM E313 standard using a spectrophotometer (CM-3700D, KONICA MINOLTA).

According to an embodiment of the present disclosure, the optical film may contain a polymer resin.

The optical film can be imparted with a parameter of restoring force after folding of 1.5 GPa or less by controlling the components and content of the repeating units of the polymer resin. In addition, the parameter of restoring force after folding can be reduced and restoring force after folding can be improved by increasing the degree of polymerization of the polymer resin.

The polymer resin may include at least one of an imide repeating unit and an amide repeating unit. For example, the polymer resin may include either an imide repeating unit or an amide repeating unit, and may include both an imide repeating unit and an amide repeating unit. The polymer resin may include at least one of a polyimide-based resin, a polyamide-based resin, and a polyamide-imide-based resin.

In the present disclosure, the imide repeating unit of the polymer resin may be prepared from monomer components including a diamine-based compound and a dianhydride-based compound. The diamine-based compound and the dianhydride-based compound may be polymerized to form amic acid, and the amic acid may be imidized again to form an imide repeating unit. In addition, the amide repeating unit may be prepared by polymerization of monomer components including a diamine-based compound and a dicarbonyl-based compound. The specific structures of the imide repeating unit and the amide repeating unit may vary depending on the monomers used for polymerization.

However, the polymer resin according to an embodiment of the present disclosure is not limited thereto. The polymer resin according to an embodiment of the present disclosure may be prepared from monomer components further including other compounds, in addition to the diamine-based compound, the dianhydride-based compound, and the dicarbonyl-based compound. Therefore, the polymer resin according to an embodiment of the present disclosure may further include other repeating units, in addition to the imide repeating unit and the amide repeating unit.

The optical film according to an embodiment of the present disclosure may contain at least one of a polyimide-based resin, a polyamide-based resin, and a polyamide-imide-based resin.

According to an embodiment of the present disclosure, the optical film may be any one of a polyimide-based film, a polyamide-based film, and a polyamide-imide-based film, but the embodiments of the present disclosure are not limited thereto. Any film having light transmittance may be used as the optical film according to an embodiment of the present disclosure.

In an embodiment of the present disclosure, the polymer resin may include the amide repeating units in an amount which corresponds to 80% or more of the total number of imide repeating units and amide repeating units. Preferably, the polymer resin may include the amide repeating units in an amount which corresponds to 95% or more of the total number of imide repeating units and amide repeating units, more preferably 98% or more thereof.

When the polymer resin includes the amide repeating units in an amount which corresponds to 80% or more of the total number of imide repeating units and amide repeating units, the optical properties of the film produced from the polymer resin can be maintained while the mechanical properties thereof can be improved; in particular, restoring force after folding can be greatly improved. That is, it is possible to produce an optical film which includes a greater amount of amide repeating units than imide repeating units, it is colorless and transparent and has excellent insolubility, chemical resistance, heat resistance, radiation resistance, low-temperature characteristics, restoring force after folding, and the like.

When a large amount of dicarbonyl-based compound is added in order to form a large number of amide repeating units, there is a problem in that the degree of polymerization of the resin decreases because the dicarbonyl-based compound is gelled and thus the polymerization reaction is insufficiently performed.

In the present disclosure, gelation of the dicarbonyl-based compound can be prevented or inhibited by performing polymerization using two or more different types of diamine-based compounds.

According to an embodiment of the present disclosure, the imide repeating unit may include a first repeating unit and a second repeating unit.

The imide repeating unit is formed by polymerization of a diamine-based compound and a dianhydride-based

compound, the first repeating unit is an imide repeating unit obtained by polymerization of a first diamine-based compound and a first dianhydride-based compound, and the second repeating unit is an imide repeating unit obtained by polymerization of a second diamine-based compound and a second dianhydride-based compound. The polymer resin of the present disclosure includes repeating units derived from at least two types of diamine-based compounds, including the first diamine-based compound and the second diamine-based compound.

Specifically, according to an embodiment of the present disclosure, the first diamine-based compound is 2,2'-bis(trifluoromethyl)benzidine (TFDB). According to an embodiment of the present disclosure, the second diamine-based compound includes an aromatic diamine-based compound other than TFDB. The imide repeating unit and the amide repeating unit of the present disclosure may be derived from TFDB and an aromatic diamine-based compound other than TFDB.

Since the 2,2'-bis(trifluoromethyl)benzidine (TFDB) has a specific linear and rigid structure, a film that includes repeating units derived from TFDB can be imparted with greatly improved mechanical properties, such as insolubility, chemical resistance, heat resistance, radiation resistance, and low-temperature characteristics.

However, polymerization between TFDB and a dicarbonyl-based compound is accelerated due to the rigid structure of 2,2'-bis(trifluoromethyl)benzidine (TFDB). Such rapid polymerization may allow only a part of the dicarbonyl-based compound to react with the diamine-based compound, and the remainder of the dicarbonyl-based compound may be gelled rather than being polymerized. The gelation of the dicarbonyl-based compound may reduce the degree of polymerization of the resin and deteriorate the optical properties of the film. Therefore, it is difficult to prepare a polymer resin including a large amount of amide repeating units merely through addition of 2,2'-bis(trifluoromethyl)benzidine (TFDB). According to the present disclosure, the second diamine-based compound can prevent gelation of the dicarbonyl-based compound and improve the polymerization degree of the polymer.

According to an embodiment of the present disclosure, the second diamine-based compound includes an aromatic diamine-based compound.

In an embodiment of the present disclosure, the term "aromatic diamine-based compound" refers to a diamine-based compound in which an amino group is directly bonded to an aromatic ring, and may include an aliphatic group or other substituents as part of the structure thereof. The aromatic ring may be a single ring, a fused ring including a single ring linked thereto directly via a heteroatom, or a condensed ring. Examples of the aromatic ring may include, but are not limited to, a benzene ring, a biphenyl ring, a naphthalene ring, an anthracene ring, and a fluorene ring.

According to an embodiment of the present disclosure, the second diamine-based compound may be represented by the following Formula 1:

[Formula 1] $$H_2N\text{-}A^1\text{-}NH_2$$

wherein $A^1$ represents a divalent aromatic organic group. The aromatic organic group refers to an organic group in which pi electrons are delocalized, whereby single bonds and double bonds alternately link to each other to form rings. For example, $A^1$ may include a divalent aromatic organic group having 4 to 40 carbon atoms. A hydrogen atom in the aromatic organic group in Formula 1 may be substituted with a halogen element, a hydrocarbon group, or a hydrocarbon group substituted with a halogen element. Here, the hydrocarbon group or the hydrocarbon group substituted with a halogen element may have 1 to 8 carbon atoms. For example, the hydrogen in $A^1$ may be substituted with -F, $-CH_3$, $-CF_3$, or the like.

An optical film produced using a diamine-based compound in which a hydrogen atom is substituted with a fluorine-substituted hydrocarbon group can be imparted with excellent light transmittance and excellent workability.

$A^1$ in Formula 1 may, for example, include a structure represented by any one of the following formulas.

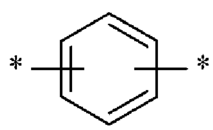
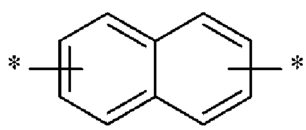

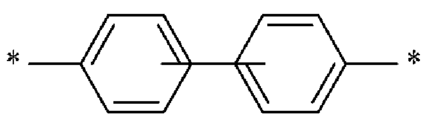
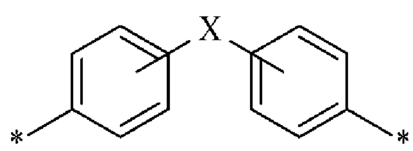

In the above formulas, * represents a bonding position. In the above formulas, X may be any one of a single bond, O, S, $SO_2$, CO, $CH_2$, $C(CH_3)_2$, and $C(CF_3)_2$. Although the bonding position of X on each ring is not particularly limited, the bonding position of X may be, for example, a meta or para position on each ring.

According to an embodiment of the present disclosure, the second diamine-based compound may include at

least one functional group selected from the group consisting of sulfonyl, carbonyl, methylene, propylene, and halogens.

The sulfonyl, carbonyl, methylene, propylene, and halogen substituents function to control the movement of electrons in the compound. Accordingly, the second diamine-based compound includes at least one substituent of sulfonyl, carbonyl, methylene, propylene, and halogens, thereby controlling the ionization energy. As a result, the reactivity and reaction rate of the polymerization reaction with the dicarbonyl-based compound can be appropriately adjusted.

According to an embodiment of the present disclosure, the second diamine-based compound may include at least one selected from the group consisting of bis(3-aminophenyl)sulfone (3DDS), bis(4-aminophenyl)sulfone (4DDS), 2,2-bis(3-aminophenyl)hexafluoropropane (3,3'-6F), 2,2-bis(4-aminophenyl)hexafluoropropane (4,4'-6F), 4,4'-methylenedianiline (MDA), 3,3'-(dimethylamino)benzophenone (3,3'-CO), 4,4'-(dimethylamino)benzophenone (4,4'-CO), and tetrachloride benzidine (CIBZ).

According to an embodiment of the present disclosure, the first dianhydride-based compound and the second dianhydride-based compound may be each independently represented by the following Formula 2. The first dianhydride-based compound and the second dianhydride-based compound may be the same as or different from each other. The present disclosure is not limited with regard thereto.

[Formula 2]

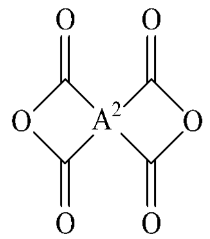

In Formula 2, $A^2$ represents a tetravalent organic group. For example, $A^2$ may include a tetravalent organic group having 4 to 40 carbon atoms. A hydrogen atom in the organic group in Formula 2 may be substituted with a halogen element, a hydrocarbon group, or a hydrocarbon group substituted with a halogen element. Here, the hydrocarbon group or the hydrocarbon group substituted with a halogen element may have 1 to 8 carbon atoms.

$A^2$ in Formula 2 may, for example, include a structure represented by any one of the following formulas.

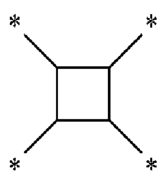 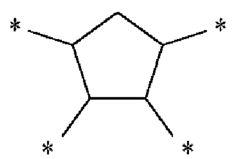 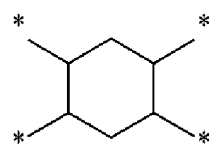 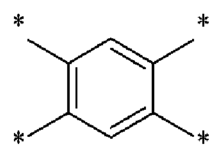

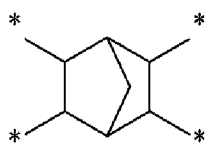 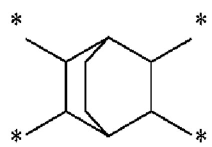 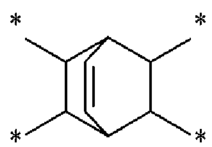 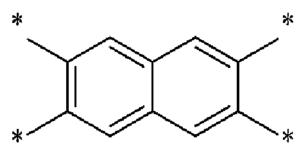

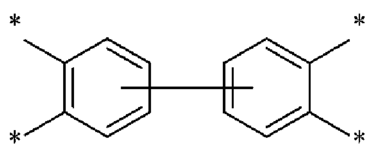 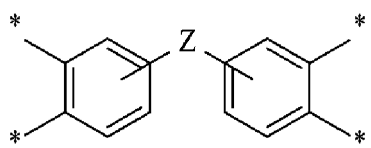 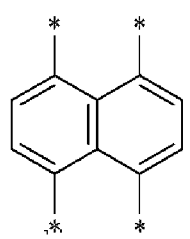

in the above formulas, * represents a bonding position. In the above formulas, Z may independently be any one of a single bond, O, S, $SO_2$, CO, $(CH_2)_n$, $(C(CH_3)_2)_n$, and $(C(CF_3)_2)_n$, and n may be an integer of 1 to 5. Although the bonding position of Z on each ring is not particularly limited, the bonding position of Z may be, for example, a meta or para position on each ring.

In an embodiment of the present disclosure, the first dianhydride-based compound and the second dianhydride-based compound may each independently include at least one selected from the group consisting of 2,2-bis(3,4-dicarboxyphenyl)hexafluoropropane dianhydride (6FDA), biphenyl tetracarboxylic dianhydride (BPDA), naphthalene tetracarboxylic dianhydride (NTDA), diphenyl sulfone tetracarboxylic dianhydride (DSDA), 4-(2,5-oxotetrahydrofuran-3-yl)-1,2,3,4-tetrahydronaphthalene-1,2-dicarboxylic anhydride (TDA), pyromellitic dianhydride (PMDA), benzophenone tetracarboxylic dianhydride (BTDA), oxydiphthalic anhydride (ODPA), bis(carboxyphenyl)dimethyl silane dianhydride (SiDA), bis(dicarboxyphenoxy)diphenyl sulfide dianhydride (BDSDA), sulfonyldiphthalic anhydride ($SO_2$DPA), and isopropylidenediphenoxy bis(phthalic anhydride) (BPADA).

The optical film according to an embodiment of the present disclosure may include, for example, a plurality of dianhydride-based compounds.

An optical film produced using a dianhydride-based compound in which a hydrogen atom is substituted with a fluorine-substituted hydrocarbon group can exhibit excellent light transmittance and workability.

According to an embodiment of the present disclosure, the amide repeating unit may include a third repeating unit and a fourth repeating unit.

The amide repeating unit is formed by polymerization of a diamine-based compound and a dicarbonyl-based compound, the third repeating unit is an amide repeating unit obtained by polymerization of a first diamine-based compound and a first dicarbonyl-based compound, and the fourth repeating unit is an amide repeating unit obtained by polymerization of a second diamine-based compound and a second dicarbonyl-based compound.

According to an embodiment of the present disclosure, the first dicarbonyl-based compound and the second dicarbonyl-based compound may be each independently represented by the following Formula 3. The first dicarbonyl-based compound and the second dicarbonyl-based compound may be the same as or different from each other. The present disclosure is not limited with regard thereto.

[Formula 3]

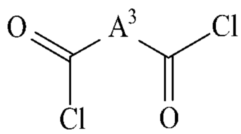

In Formula 3, $A^3$ represents a divalent organic group. For example, $A^3$ may include a divalent organic group having 4 to 40 carbon atoms. A hydrogen atom in the organic group in Formula 3 may be substituted with a halogen element, a hydrocarbon group, or a hydrocarbon group substituted with fluorine. Here, the hydrocarbon group or the hydrocarbon group substituted with fluorine may have 1 to 8 carbon atoms. For example, the hydrogen in $A^3$ may be substituted with -F, $-CH_3$, $-CF_3$, or the like.

$A^3$ in Formula 3 may, for example, include a structure represented by any one of the following formulas.

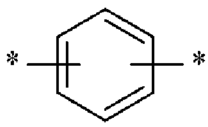 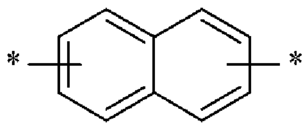

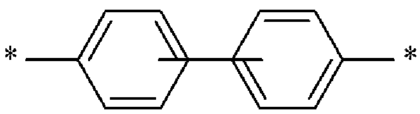 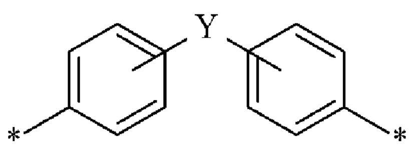

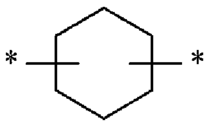 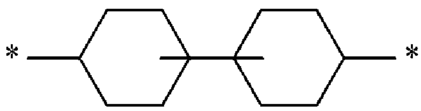 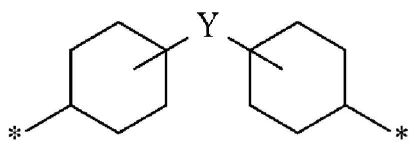

In the above formulas, * represents a bonding position. In the above formulas, Y may independently be any one of a single bond, O, S, $SO_2$, CO, $CH_2$, $C(CH_3)_2$ and $C(CF_3)_2$. Although the bonding position of Y on each ring is not particularly limited, the bonding position of Y may be, for example, a meta or para position on each ring.

According to an embodiment of the present disclosure, the first dicarbonyl-based compound and the second

dicarbonyl-based compound may each independently include at least one selected from the group consisting of terephthaloyl chloride (TPC), isophthaloyl dichloride (IPC), biphenyl dicarbonyl chloride (BPDC), 4,4'-oxybisbenzoyl chloride (OBBC), and naphthalene dicarbonyl dichloride (NTDC).

In an embodiment of the present disclosure, the ratio of the number of first and third repeating units to the number of second and fourth repeating units is 95:5 to 50:50. Both the first repeating unit and the third repeating unit are repeating units formed by polymerization using the first diamine-based compound, and both the second repeating unit and the fourth repeating unit are repeating units formed by polymerization using the second diamine-based compound. Therefore, the molar ratio of the first diamine-based compound used for polymerization to the second diamine-based compound used for polymerization is 95:5 to 50:50.

When, with regard to the ratio of the number of first and third repeating units to the number of second and fourth repeating units, the fraction of the number of first and third repeating units increases above 95:5, the haze of the film may increase due to the increased ratio of the repeating units derived from TFDB and the dicarbonyl-based compound. On the other hand, when the fraction of the number of second and fourth repeating units increases above 50:50, the heat resistance and strength of the film may be deteriorated.

The polymer resin according to an embodiment of the present disclosure may include a first repeating unit represented by the following Formula 4 and a second repeating unit represented by the following Formula 5:

[Formula 4]

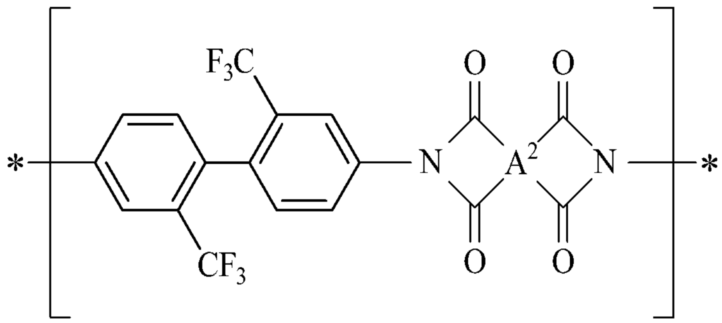

wherein $A^2$ is as described above, and

[Formula 5]

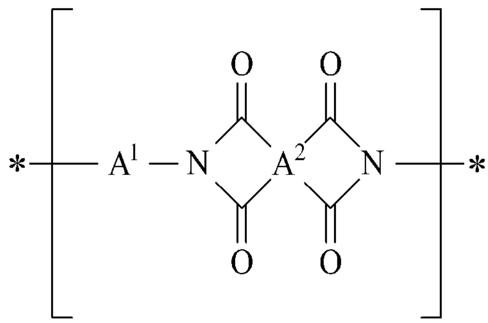

wherein $A^1$ and $A^2$ are as described above.

The polymer resin according to an embodiment of the present disclosure may include a third repeating unit represented by the following Formula 6 and a fourth repeating unit represented by the following Formula 7:

[Formula 6]

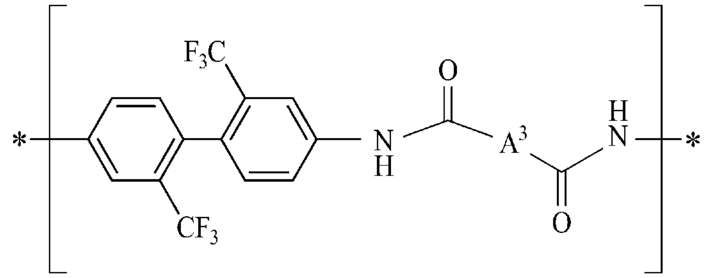

wherein $A^3$ is as described above, and

[Formula 7]

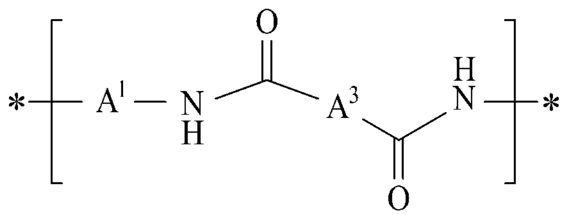

wherein $A^1$ and $A^3$ are as described above.

According to an embodiment of the present disclosure, the weight average molecular weight (Mw) of the polymer resin of the present disclosure may be 200,000 to 500,000.

The weight average molecular weight of the polymer resin can be measured under the following conditions using a GPC (Alliance e2695/2414 RID, Waters).

Detector: 2414 RID, Waters
Mobile phase: 10 mM LiBr in DMAc
Sample concentration: 0.25(w/w)% in DMAc
Column and detector temperature: 50°C
Flow Rate: 1.0 ml/min

The gelation of the dicarbonyl-based compound due to the high reaction rate with a diamine-based compound, in particular TFDB, reduces the degree of polymerization of the polymer resin including a large number of amide repeating units. The weight average molecular weight is proportional to the polymerization degree. That is, as the polymerization degree decreases, the weight average molecular weight of the polymer resin also decreases.

When the weight average molecular weight of the polymer resin is less than 200,000, the degree of polymerization decreases, the number of end groups of the polymer chain increases, and the physical properties of the polymer resin are deteriorated. On the other hand, it is difficult to prepare a polymer resin having a weight average molecular weight of more than 500,000 during the process. The weight average molecular weight of the polymer resin is adjusted by controlling the polymerization viscosity during polymerization. A resin having a weight average molecular weight exceeding 500,000 is disadvantageous for processing because of the very high polymerization viscosity and consequent reduced flowability of the reaction solution, which make it difficult to control and handle, and the necessity of a large amount of solvent in order to dissolve the polymer resin again.

According to an embodiment of the present disclosure, the optical film is light-transmissive. In addition, the optical film is flexible. For example, the optical film according to an embodiment of the present disclosure is bendable, foldable, or rollable. The optical film may have excellent mechanical and optical properties.

According to an embodiment of the present disclosure, the optical film may have a thickness sufficient for the optical film to protect the display panel. For example, the optical film may have a thickness of 10 to 100 um.

According to an embodiment of the present disclosure, the optical film may have an average light transmittance in the visible light region, measured using a UV spectrophotometer, of 88% or more based on a thickness of 50 um.

The average light transmittance of the optical film may be measured in a wavelength range of 360 to 740 nm using a spectrophotometer.

According to an embodiment of the present disclosure, the optical film may have a haze of 0.5% or less based on a thickness of 50 um.

The haze of the optical film may be determined by cutting the produced optical film to a sample having a size of 50 mm x 50 mm, performing measurement five times using a haze meter (model name: HM-150, produced by Murakami Color Research Laboratory) in accordance with the ASTM D1003 standard, and taking the average of the five values as the haze of the optical film.

FIG. 2 is a cross-sectional view illustrating a part of a display device 200 according to another embodiment, and FIG. 3 is an enlarged cross-sectional view of "P" in FIG. 2.

Referring to FIG. 2, the display device 200 according to another embodiment of the present disclosure includes a display panel 501 and an optical film 100 on the display panel 501.

Referring to FIGS. 2 and 3, the display panel 501 includes a substrate 510, a thin film transistor TFT on the substrate 510, and an organic light-emitting device 570 connected to the thin film transistor TFT. The organic light-emitting device 570 includes a first electrode 571, an organic light-emitting layer 572 on the first electrode 571, and a second electrode 573 on the organic light-emitting layer 572. The display device 200 shown in FIGS. 2 and 3 is an organic light-emitting display device.

The substrate 510 may be formed of glass or plastic. Specifically, the substrate 510 may be formed of plastic such as a polymer resin or an optical film. Although not shown, a buffer layer may be disposed on the substrate 510.

The thin film transistor TFT is disposed on the substrate 510. The thin film transistor TFT includes a semiconductor layer 520, a gate electrode 530 that is insulated from the semiconductor layer 520 and at least partially overlaps the semiconductor layer 520, a source electrode 541 connected to the semiconductor layer 520, and a drain electrode 542 that is spaced apart from the source electrode 541 and is connected to the semiconductor layer 520.

Referring to FIG. 3, a gate insulating layer 535 is disposed between the gate electrode 530 and the semiconductor layer 520. An interlayer insulating layer 551 may be disposed on the gate electrode 530, and a source electrode 541 and a drain electrode 542 may be disposed on the interlayer insulating layer 551.

A planarization layer 552 is disposed on the thin film transistor TFT to planarize the top of the thin film transistor TFT.

A first electrode 571 is disposed on the planarization layer 552. The first electrode 571 is connected to the thin film transistor TFT through a contact hole provided in the planarization layer 552.

A bank layer 580 is disposed on the planarization layer 552 in a part of the first electrode 571 to define pixel areas or light-emitting areas. For example, the bank layer 580 is disposed in the form of a matrix at the boundaries between a plurality of pixels to define the respective pixel regions.

The organic light-emitting layer 572 is disposed on the first electrode 571. The organic light-emitting layer 572 may also be disposed on the bank layer 580. The organic light-emitting layer 572 may include one light-emitting layer, or two light-emitting layers stacked in a vertical direction. Light having any one color among red, green, and blue may be emitted from the organic light-emitting layer 572, and white light may be emitted therefrom.

The second electrode 573 is disposed on the organic light-emitting layer 572.

The first electrode 571, the organic light-emitting layer 572, and the second electrode 573 may be stacked to constitute the organic light-emitting device 570.

Although not shown, when the organic light-emitting layer 572 emits white light, each pixel may include a color filter for filtering the white light emitted from the organic light-emitting layer 572 based on a particular wavelength. The color filter is formed in the light path.

A thin-film encapsulation layer 590 may be disposed on the second electrode 573. The thin-film encapsulation layer 590 may include at least one organic layer and at least one inorganic layer, and the at least one organic layer and the at least one inorganic layer may be alternately disposed.

The optical film 100 is disposed on the display panel 501 having the stack structure described above.

Hereinafter, a method of manufacturing an optical film according to another embodiment of the present disclosure will be described in brief.

The method of manufacturing an optical film according to an embodiment of the present disclosure includes preparing a polymer resin, dissolving the polymer resin in a solvent to prepare a polymer resin solution, and producing an optical film using the polymer resin solution.

The preparation of the polymer resin may be carried out by polymerizing monomers for forming the polymer resin.

According to another embodiment of the present disclosure, the polymer resin may be prepared from monomer

components including a first diamine-based compound, a second diamine-based compound, a first dianhydride-based compound, a second dianhydride-based compound, a first dicarbonyl-based compound, and a second dicarbonyl-based compound. There is no limitation as to the order or method of addition of the monomers in the present disclosure. For example, first and second dianhydride-based compounds and first and second diamine-based compounds may be sequentially added to a solution in which the first and second diamine-based compounds are dissolved, and the resulting mixture may be subjected to polymerization. Alternatively, in order to avoid randomness, the first diamine-based compound, the first and second dianhydride-based compounds, the second diamine-based compound, and the first and second dicarbonyl-based compounds may be added in that order, or the second diamine-based compound, the first and second dianhydride-based compounds, the first diamine-based compound, and the first and second dicarbonyl-based compounds may be added in that order, followed by polymerization.

More specifically, the polymer resin may be prepared through polymerization and imidization of monomers including the first diamine-based compound, the second diamine-based compound, the first and second dianhydride-based compounds, and the first and second dicarbonyl-based compounds. The imide repeating unit may be prepared through polymerization and imidization of monomers including the first and second diamine-based compounds and the first and second dianhydride-based compounds. In addition, the amide repeating unit may be prepared through polymerization of monomers including the first and second diamine-based compounds and the first and second dicarbonyl-based compounds.

Accordingly, the polymer resin according to another embodiment of the present disclosure may have the imide repeating unit and the amide repeating unit.

The imide repeating unit and the amide repeating unit may be separately prepared and then copolymerized. Alternatively, an imide repeating unit may be prepared first, and then a dicarbonyl-based compound may be further added to prepare an amide repeating unit, or an amide repeating unit may be prepared first, and then a dianhydride-based compound may be further added to prepare an imide repeating unit. The polymer resin of the present disclosure is not limited as to the formation order of the repeating unit (the order in which the monomers are added).

According to another embodiment of the present disclosure, the first and second dicarbonyl-based compounds may be added in an amount of 80 mol% or more based on the total molar amount of the first and second dianhydride-based compounds and the first and second dicarbonyl-based compounds. Accordingly, the polymer resin of the present disclosure includes the amide repeating unit in an amount of 80% or more. Preferably, the first and second dicarbonyl-based compounds may be added in an amount of 95 mol% or more, more preferably in an amount of 98 mol% or more, based on the total molar amount of the first and second dianhydride-based compounds and the first and second dicarbonyl-based compounds.

According to another embodiment of the present disclosure, the first diamine-based compound is 2,2'-bis(trifluoromethyl)benzidine (TFDB).

According to another embodiment of the present disclosure, the second diamine-based compound includes an aromatic diamine-based compound. Hereinafter, an explanation of the above configuration is omitted in order to avoid duplicate description.

2,2'-bis(trifluoromethyl)benzidine (TFDB) may be used as the first diamine-based compound, aromatic diamine-based compounds of Formula 1 described above may be used as the second diamine-based compound, and the compounds of Formula 2 described above may be used as the first and second dianhydride-based compounds. The compounds of Formula 3 described above may be used as the first and second dicarbonyl-based compounds.

According to another embodiment of the present disclosure, the aromatic diamine-based compound of the second diamine-based compound may include at least one functional group selected from the group consisting of sulfonyl, carbonyl, methylene, propylene, and halogens.

According to another embodiment of the present disclosure, the aromatic diamine-based compound of the second diamine-based compound may include at least one selected from the group consisting of bis(3-aminophenyl)sulfone (3DDS), bis(4-aminophenyl)sulfone (4DDS), 2,2-bis(3-aminophenyl)hexafluoropropane (3,3'-6F), 2,2-bis(4-aminophenyl)hexafluoropropane (4,4'-6F), 4,4'-methylenedianiline (MDA), 3,3'-(dimethylamino)benzophenone (3,3'-CO), 4,4'-(dimethylamino)benzophenone (4,4'-CO), and tetrachloride benzidine (CIBZ).

According to another embodiment of the present disclosure, the ratio of the amount of the first diamine-based compound that is added to the amount of the second diamine-based compound that is added may be 95:5 to 50:50.

In another embodiment of the present disclosure, the solvent for preparing the polymer resin solution may be, for example, a polar aprotic organic solvent such as N,N-dimethylacetamide (DMAc), N,N-dimethylformamide (DMF), 1-methyl-2-pyrrolidinone (NMP), m-cresol, tetrahydrofuran (THF), chloroform, methyl ethyl ketone (MEK), or a mixture thereof. However, the solvent according to an embodiment of the present disclosure is not limited thereto, and other solvents may be used.

Hereinafter, the present disclosure will be described in more detail with reference to exemplary examples. However, the following preparation examples and examples should not be construed as limiting the scope of the present disclosure.

<Example 1>

313.34 g of N,N-dimethylacetamide (DMAc) was charged in a 500 mL reactor equipped with a stirrer, a nitrogen injector, a dropping funnel, a temperature controller, and a cooler while nitrogen was passed through the reactor. Then, the temperature of the reactor was adjusted to 25°C, 24.02 g (0.075 mol) of TFDB as a first diamine-based compound was dissolved therein, 6.21 g (0.025 mol) of bis(3-aminophenyl)sulfone (3DDS) as a second diamine-based compound was further dissolved therein, and the resulting solution was maintained at 25°C. 0.89 g (0.002 mol) of 6FDA was added to the resulting diamine-based compound solution and thoroughly dissolved therein by stirring for 2 hours. The reactor temperature was lowered to 10 °C, 19.90 g (0.098 mol) of terephthaloyl chloride (TPC) was added thereto, completely dissolved, and reacted for 1 hour, and then the temperature was elevated to 25 °C. 0.35 g of pyridine and 0.45 g of acetic anhydride were added to the resulting reaction solution and stirred at 80°C for 30 minutes, and excess methanol was then added dropwise to obtain a polyamide-imide powder. The powder was filtered under reduced pressure, dried, and dissolved again in DMAc to prepare a polymer resin solution having a solid concentration of 14 wt%.

The obtained polymer resin solution was cast. A casting substrate was used for casting. There is no particular limitation as to the type of the casting substrate. As the casting substrate, a glass substrate, a stainless steel (SUS) substrate, a Teflon substrate, or the like may be used. According to an embodiment of the present disclosure, an organic substrate may be used as the casting substrate.

Specifically, the obtained polymer resin solution was applied onto a glass substrate, cast, and dried with hot air at 80°C for 20 minutes and at 120°C for 20 minutes to produce a film. Then, the produced film was peeled off of the glass substrate and fixed to a frame with a pin.

The frame to which the film was fixed was placed in an oven, and then was dried with hot air at a constant temperature of 270°C for 10 minutes. As a result, an optical film having a thickness of 50 um was completed.

<Examples 2 to 14>

Optical films of Examples 2 to 14 were manufactured in the same manner as in Example 1, except that the addition amount of the first diamine-based compound, the type and addition amount of the second diamine-based compound, the addition amount of the dianhydride-based compound, and the type and addition amount of the dicarbonyl-based compound were changed.

Details of the addition amount of the first diamine-based compound, the type and addition amount of the second diamine-based compound, the addition amount of the dianhydride-based compound, and the type and addition amount of the dicarbonyl-based compound of Examples 1 to 14 are shown in Table 1 below.

<Comparative Examples 1 to 3>

The optical films of Comparative Examples 1 to 3 were manufactured in the same manner as in Example 1, except that the addition amount of the first diamine-based compound, whether the second diamine-based compound was added and the type and addition amount thereof, the addition amount of the dianhydride-based compound, and the type and addition amount of the dicarbonyl-based compound were changed.

Details of the addition amount of the first diamine-based compound, whether the second diamine-based compound was added and the type and addition amount thereof, the addition amount of the dianhydride-based compound, and the type and addition amount of the dicarbonyl-based compound of Comparative Examples 1 to 3 are shown in Table 1 below.

<Example 4>

313.34 g of N,N-dimethylacetamide (DMAc) was charged in a 500 mL reactor equipped with a stirrer, a nitrogen injector, a dropping funnel, a temperature controller, and a cooler while nitrogen was passed through the reactor. Then, the temperature of the reactor was adjusted to 25°C, 28.8207 g (0.090 mol) of TFDB as a first diamine-based compound was dissolved therein, 2.483 g (0.010 mol) of bis(4-aminophenyl)sulfone (4DDS) as a second diamine-based compound was further dissolved therein, and the resulting solution was maintained at 25°C. 5.8833 g (0.030 mol) of cyclobutane-1,2,3,4-tetracarboxylic dianhydride (CBDA) and 2.2212 g (0.005 mol) of 6FDA was added to the resulting diamine-based compound solution and thoroughly dissolved therein by stirring for 2 hours. The reactor temperature was lowered to 10 °C, 13.1989 g (0.065 mol) of terephthaloyl chloride (TPC) was added thereto, completely dissolved, and reacted for 1 hour, and then the temperature was elevated to 25 °C. 0.35 g of pyridine and 0.45 g of acetic anhydride were added to the resulting reaction solution and stirred at 80°C for 30 minutes, and excess methanol was added dropwise to obtain a polyamide-imide powder. The powder was filtered under reduced pressure, dried, and dissolved again in DMAc to prepare a polymer resin solution having a solid concentration of 14 wt%.

The obtained polymer resin solution was cast. A casting substrate was used for casting. There is no particular limitation as to the type of the casting substrate. As the casting substrate, a glass substrate, a stainless steel (SUS) substrate, a Teflon substrate, or the like may be used. According to an embodiment of the present disclosure, an organic substrate may be used as the casting substrate.

Specifically, the obtained polymer resin solution was applied onto a glass substrate, cast, and dried with hot air at 80°C for 20 minutes and at 120°C for 20 minutes to produce a film. Then, the produced film was peeled off of the glass substrate and fixed to a frame with a pin.

The frame to which the film was fixed was placed in an oven, and then was dried with hot air at a constant temperature of 270°C for 10 minutes. As a result, an optical film having a thickness of 50 um was completed.

<Comparative Examples 5 and 6>

Optical films of Comparative Examples 5 and 6 were manufactured in the same manner as in Example 1, except that the addition amount of the first diamine-based compound, the addition amount of the second diamine-based compound, the addition amount of the dianhydride-based compound, and the addition amount of the dicarbonyl-based compound were changed.

Details of the addition amount of the first diamine-based compound, the addition amount of the second diamine-based compound, the addition amount of the dianhydride-based compound, and the addition amount of the dicarbonyl-based compound of Comparative Examples 5 and 6 are shown in Table 1 below.

[Table 1]

| Item | Type and addition amount of first diamine-based compound (mol%) | Type and addition amount of second diamine-based compound (mol%) | Type and addition amount of dianhydride-based compound (mol%) | Type and addition amount of dicarbonyl-based compound (mol%) | Film thickness ($\mu$m) |
|---|---|---|---|---|---|
| Example 1 | TFDB: 75 | 3DDS: 25 | 6FDA: 2 | TPC: 98 | 50 |
| Example 2 | TFDB: 80 | 3DDS: 20 | 6FDA: 5 | TPC: 95 | 50 |
| Example 3 | TFDB: 75 | 3DDS: 25 | 6FDA: 5 | TPC: 95 | 50 |
| Example 4 | TFDB: 75 | 3DDS: 25 | 6FDA: 5 | BPDC: 95 | 80 |
| Example 5 | TFDB: 90 | 4DDS: 10 | 6FDA: 5 | TPC: 95 | 50 |
| Example 6 | TFDB: 85 | 4DDS: 15 | 6FDA: 5 | TPC: 95 | 50 |
| Example 7 | TFDB: 85 | 4DDS: 15 | 6FDA: 2 | TPC: 98 | 50 |
| Example 8 | TFDB: 90 | 4DDS: 10 | 6FDA: 10 | TPC: 90 | 50 |
| Example 9 | TFDB: 90 | 4DDS: 10 | 6FDA: 20 | TPC: 80 | 50 |
| Example 10 | TFDB: 75 | 3,3'-6F: 25 | 6FDA: 2 | TPC: 98 | 50 |
| Example 11 | TFDB: 90 | 4,4'-6F: 10 | 6FDA: 5 | TPC: 95 | 50 |
| Example 12 | TFDB: 50 | 3DDS: 50 | 6FDA: 20 | TPC: 80 | 50 |
| Example 13 | TFDB: 50 | 3DDS: 50 | 6FDA: 5 | TPC: 95 | 50 |
| Example 14 | TFDB: 95 | 4DDS: 5 | 6FDA: 5 | TPC: 95 | 50 |
| Comparative Example 1 | TFDB: 75 | pPDA: 25 | 6FDA: 2 | TPC: 98 | Impossible to manufacture |
| Comparative Example 2 | TFDB: 90 | 8FODA: 10 | 6FDA: 5 | TPC: 95 | 50 |
| Comparative Example 3 | TFDB: 100 | - | 6FDA: 5 | TPC: 95 | 50 |

(continued)

| Item | Type and addition amount of first diamine-based compound (mol%) | Type and addition amount of second diamine-based compound (mol%) | Type and addition amount of dianhydride-based compound (mol%) | Type and addition amount of dicarbonyl-based compound (mol%) | Film thickness ($\mu$m) |
|---|---|---|---|---|---|
| Comparative Example 4 | TFDB: 90 | 4DDS: 10 | CBDA: 30, 6FDA: 5 | TPC: 65 | 80 |
| Comparative Example 5 | TFDB: 97 | 3DDS: 3 | 6FDA: 5 | TPC: 95 | 50 |
| Comparative Example 6 | TFDB: 45 | 3DDS: 55 | 6FDA: 5 | TPC: 95 | 50 |
| TFDB: 2,2'-bis(trifluoromethyl)benzidine<br>3DDS: Bis(3-aminophenyl)sulfone<br>4DDS: Bis(4-aminophenyl)sulfone<br>3,3'-6F: 2,2-bis(3-aminophenyl)hexafluoropropane<br>4,4'-6F: 2,2-bis(4-aminophenyl)hexafluoropropane<br>pPDA: Para-phenylene diamine<br>8FODA: Oxy-4,4'-bis(2,3,5,6-tetrafluoroaniline)<br>TPC: Terephthaloyl chloride<br>BPDC: 4,4'-biphenyl dicarbonyl chloride<br>CBDA: Cyclobutane-1,2,3,4-tetracarboxylic dianhydride | | | | | |

<Measurement Example>

The following measurements were performed on the polymer resins and films produced in Examples 1 to 14 and Comparative Examples 1 to 6.

1) Weight average molecular weight of polymer resin: the weight average molecular weight of the polymer resin was measured under the following conditions using a GPC (Alliance e2695/2414 RID, Waters).

Detector: 2414 RID, Waters
Mobile phase: 10 mM LiBr in DMAc
Sample concentration: 0.25(w/w)% in DMAc
Column and detector temperature: 50°C
Flow Rate: 1.0 ml/min

2) Modulus: the modulus was measured under the following conditions using a universal testing machine (e.g., from Instron Corp.) in accordance with the ASTM D882 standard.

- 25°C/50RH%
- Load Cell: 30 KN, Grip: 250 N
- Specimen size: 10 X 50 mm, tensile speed: 25 mm/min

3) Poisson's ratio: the Poisson's ratio of the optical film was measured using a non-contact (video extensometer) method in accordance with the ASTM E-132 standard. Specifically, the Poisson's ratio was measured under the following conditions using a universal testing machine (e.g., Instron 3367 from Instron Corp.).

- Test speed: 10 mm/min
- (25$\pm$2)°C/(45$\pm$5)%RH

4) Elastic strain index (E') : the elastic strain index (E') of the optical film was calculated using a non-contact (video extensometer) method in accordance with the following Equation 2:

[Equation 2]

$$\text{Elastic strain index } (E') = E/(1-v^2)$$

5) Yellowness index (Y.I.): The yellowness index was measured using a spectrophotometer (CM-3700D, KONICA MINOLTA) in accordance with the ASTM E313 standard.

6) Parameter of restoring force after folding: the parameter of restoring force after folding of the optical film was calculated using the following Equation 1:

[Equation 1]

$$\text{Foldability parameter} = \frac{E' * d}{\{(1000 * R) + \frac{d}{2}\}}$$

wherein R represents the radius of curvature of the optical film in the centerline of the fold when folded, expressed in mm, d represents the thickness of the optical film, expressed in μm, and E' represents the elastic strain index, wherein only numbers, excluding units, are applied to the radius of curvature and thickness.

7) Light transmittance (%): an average optical transmittance at a wavelength of 360 to 740 nm was measured using a spectrophotometer (CM-3700D, KONICA MINOLTA).

8) Haze: haze was determined by cutting the produced optical film to a sample having a size of 50 mm x 50 mm, performing measurement five times using a haze meter (model name: HM-150, produced by Murakami Color Research Laboratory) in accordance with the ASTM D1003 standard, and taking the average of the five values as the haze of the optical film.

9) Folding traces: a sample having a size of 100 mm X 50 mm randomly obtained from the optical film was subjected to a bending test along a single bending axis. The bending test was performed by repeatedly bending a 100 mm X 50 mm sample 200,000 times at a speed of 60 rpm at 25 °C/50 RH% to a radius of curvature of 2.0 mm (diameter of 4.0 mm) using a bending test machine (YUASA, DLDM111LHA). Then, the occurrence of folding traces along the bending axis was analyzed.

At this time, an analysis method for sharpening the contrast (shading) of the folding traces may be required. For example, imaging may be performed by inspecting foreign material on the film. If possible, various inspection methods such as reflection, scattering, and transmission methods are used to detect defects or dents that are difficult to perceive using a CCD camera or the naked eye, in order to detect foreign matter having the same color as the material for the film. Preferred is the use of an inspection (i.e., determination) device rather than a measurement device.

Specifically, for example, the inspection device includes three components, namely, an inspection device, a control unit (controller box: converts laser data received through the inspection device into image data) and a dedicated PC (imaging PC: a PC having installed thereon a dedicated application, which is connected to the control unit (controller box) and is capable of performing image processing). That is, the analysis/evaluation may be performed by setting measurement/evaluation conditions, converting laser data to image data, and conducting analysis using known software for analyzing the brightness, saturation, reflectivity, etc. of the image/photo, but is not limited thereto.

The measurement results are shown in Tables 2 and 3 below.

[Table 2]

| Item | Weight average molecular weight of resin | Radius of curvature (R) | Poisson's ratio | Modulus | Elastic strain index (E') (GPa) | Parameter of restoring force after folding (GPa) |
|---|---|---|---|---|---|---|
| Example 1 | 330,000 | 0.5 | 0.34 | 6.9 | 7.802 | 0.7430 |
| Example 2 | 347,000 | 0.5 | 0.34 | 6.7 | 7.576 | 0.7215 |
| Example 3 | 320,000 | 0.5 | 0.34 | 7.2 | 8.141 | 0.7753 |
| Example 4 | 310,000 | 0.5 | 0.34 | 6.6 | 7.463 | 1.1056 |
| Example 5 | 302,000 | 0.5 | 0.33 | 6.4 | 7.182 | 0.6840 |
| Example 6 | 305,000 | 0.5 | 0.33 | 6.6 | 7.407 | 0.7054 |
| Example 7 | 310,000 | 0.5 | 0.33 | 6.7 | 7.519 | 0.7161 |
| Example 8 | 297,000 | 0.5 | 0.33 | 6.5 | 7.294 | 0.6947 |
| Example 9 | 270,000 | 0.5 | 0.33 | 6.3 | 7.070 | 0.6733 |
| Example 10 | 250,000 | 0.5 | 0.35 | 6.7 | 7.635 | 0.7272 |
| Example 11 | 240,000 | 0.5 | 0.35 | 6.5 | 7.407 | 0.7055 |
| Example 12 | 220,000 | 0.5 | 0.34 | 6.1 | 6.897 | 0.6569 |
| Example 13 | 235,000 | 0.5 | 0.34 | 6.5 | 7.350 | 0.7000 |
| Example 14 | 295,000 | 0.5 | 0.33 | 6.2 | 6.958 | 0.6622 |
| Comparative Example 1 | Impossible measurement | Impossible measurement | Impossible measurement | Impossible measurement | Impossible measurement | Impossible measurement |
| Comparative Example 2 | 120,000 | 0.5 | 0.33 | 4.8 | 5.387 | 0.5130 |
| Comparative Example 3 | 440,000 | 0.5 | 0.32 | 4.9 | 5.459 | 0.5199 |
| Comparative Example 4 | 380,000 | 0.5 | 0.31 | 9.2 | 10.178 | 1.505 |
| Comparative Example 5 | 270,000 | 0.5 | 0.33 | 4.75 | 5.33 | 0.507 |
| Comparative Example 6 | 185,000 | 0.5 | 0.34 | 4.1 | 4.636 | 0.4412 |

[Table 3]

| Item | Yellowness index (Y.I.) | Light transmittance (%) | Haze (%) | Folding traces |
|---|---|---|---|---|
| Example 1 | 2.12 | 88.71 | 0.4 | X |
| Example 2 | 1.88 | 88.99 | 0.3 | X |
| Example 3 | 1.79 | 89.04 | 0.3 | X |
| Example 4 | 2.89 | 88.12 | 0.3 | X |
| Example 5 | 1.93 | 89.02 | 0.3 | X |
| Example 6 | 1.73 | 89.17 | 0.2 | X |
| Example 7 | 1.81 | 89.09 | 0.3 | X |
| Example 8 | 2.67 | 88.01 | 0.2 | X |
| Example 9 | 1.55 | 89.27 | 0.2 | X |
| Example 10 | 1.93 | 88.89 | 0.3 | X |
| Example 11 | 1.9 | 89.15 | 0.2 | X |
| Example 12 | 1.5 | 89.12 | 0.3 | X |
| Example 13 | 1.8 | 88.87 | 0.3 | X |
| Example 14 | 2.2 | 88.98 | 0.3 | X |
| Comparative Example 1 | Impossible measurement | Impossible measurement | Impossible measurement | Impossible measurement |
| Comparative Example 2 | 6.54 | 88.22 | 0.8 | Δ |
| Comparative Example 3 | 27.9 | 58.4 | 49.6 | Δ |
| Comparative Example 4 | 4.1 | 86.5 | 0.7 | ○ |
| Comparative Example 5 | 5.3 | 87 | 0.9 | Δ |
| Comparative Example 6 | 6.7 | 85 | 1.2 | Δ |

As can be seen from the results of measurement of Tables 2 and 3, Examples 1 to 14 of the present disclosure had a high weight average molecular weight and exhibited excellent yellowness index, light transmittance, and haze. In addition, all of Examples 1 to 14 of the present disclosure had a parameter of restoring force after folding of 1.5 GPa or less and an elastic strain index (E') of 5.5 GPa or more, and left no folding traces(X) even after the bending test.

However, in Comparative Example 1, it was impossible to produce a film due to gelation of the dicarbonyl-based compound. In Comparative Example 2, the resin had a low weight average molecular weight, and visibility was poor due to the high yellowness index and haze. In Comparative Example 2, the parameter of restoring force after folding was 1.5 GPa or less, but the elastic strain index (E') was less than 5.5 GPa, and thus slight folding traces(△) were left after the bending test. In Comparative Example 3, the parameter of restoring force after folding was 1.5 GPa or less, but the elastic strain index (E') was less than 5.5 GPa, and slight folding traces were left after the bending test. In Comparative Example 4, yellowness index and haze were high, light transmittance was low, a parameter of restoring force after folding was higher than 1.5 GPa, and severe folding traces(O) were left after the bending test. In Comparative Example 5, yellowness index and haze were high and light transmittance was low, and thus visibility was low. In Comparative Example 5, the parameter of restoring force after folding was 1.5 GPa or less, but the elastic strain index (E') was less than 5.5 GPa, and slight folding traces (△) were left after the bending test. In Comparative Example 6, the resin had a low weight average molecular weight, yellowness index and haze were high, and light transmittance was low, and thus visibility was poor. In Comparative Example 6, the parameter of restoring force after folding was 1.5 GPa

or less, but the elastic strain index (E') was less than 5.5 GPa, and slight folding traces(△) were left after the bending test.

[Explanation of reference numerals]

100: Optical film
200: Display device
501: Display panel

## Claims

1. An optical film comprising a polymer resin and having a yellowness index of 3.0 or less and a parameter of restoring force after folding, calculated using the following Equation 1, of 1.5 GPa or less:

[Equation 1]

$$\text{Parameter of restoring force after folding} = \frac{E' * d}{\{(1000 * R) + \frac{d}{2}\}}$$

wherein R is 0.5 mm, which is a radius of curvature of the optical film in a centerline of a fold when folded;
d is a thickness of the optical film, which is expressed as um; and
E' is an elastic strain index calculated using the following Equation 2,
wherein only numbers, excluding units, are applied to the radius of curvature and thickness in Equation 1,

[Equation 2]

$$\text{Elastic strain index } (E') = E/(1-v^2)$$

wherein E is a modulus of the optical film, expressed as GPa, and
v is a Poisson's ratio of the optical film.

2. The optical film according to claim 1, wherein the elastic strain index (E') calculated using Equation 2 is 5.5 or more.

3. The optical film according to claim 1, wherein the polymer resin comprises an imide repeating unit and an amide repeating unit.

4. The optical film according to claim 3, wherein the amide repeating unit is present in an amount of 80% or more of a total number of the imide repeating unit and the amide repeating unit.

5. The optical film according to claim 3, wherein the imide repeating unit comprises a first repeating unit and a second repeating unit.

6. The optical film according to claim 3, wherein the amide repeating unit comprises a third repeating unit and a fourth repeating unit.

7. The optical film according to claim 5, wherein the first repeating unit is an imide repeating unit formed by polymerization of a first diamine-based compound and a first dianhydride-based compound, and
the second repeating unit is an imide repeating unit formed by polymerization of a second diamine-based compound and a second dianhydride-based compound.

8. The optical film according to claim 6, wherein the third repeating unit is an amide repeating unit formed by polymerization of the first diamine-based compound and a first dicarbonyl-based compound, and
the fourth repeating unit is an amide repeating unit formed by polymerization of a second diamine-based compound

and a second dicarbonyl-based compound.

**9.** The optical film according to claim 7 or 8, wherein the first diamine-based compound is 2,2'-bis(trifluoromethyl)benzidine (TFDB).

**10.** The optical film according to claim 7 or 8, wherein the second diamine-based compound comprises at least one functional group selected from the group consisting of sulfonyl, carbonyl, methylene, propylene, and halogens.

**11.** The optical film according to claim 7 or 8, wherein the second diamine-based compound comprises at least one selected from the group consisting of bis(3-aminophenyl)sulfone (3DDS), bis(4-aminophenyl)sulfone (4DDS), 2,2-bis(3-aminophenyl)hexafluoropropane (3,3'-6F), 2,2-bis(4-aminophenyl)hexafluoropropane (4,4'-6F), 4,4'-methylenedianiline (MDA), 3,3'-diaminobenzophenone, 4,4'-diaminobenzophenone, and tetrachloride benzidine (CIBZ).

**12.** The optical film according to claim 7 or 8, wherein a molar ratio of the polymerized first diamine-based compound and the polymerized second diamine-based compound is 95:5 to 50:50.

**13.** The optical film according to claim 1, wherein the polymer resin has a weight average molecular weight (Mw) of 200,000 to 500,000.

**14.** A display device comprising:

a display panel; and
the optical film according to any one of claims 1 to 13 disposed on the display panel.

FIG. 1

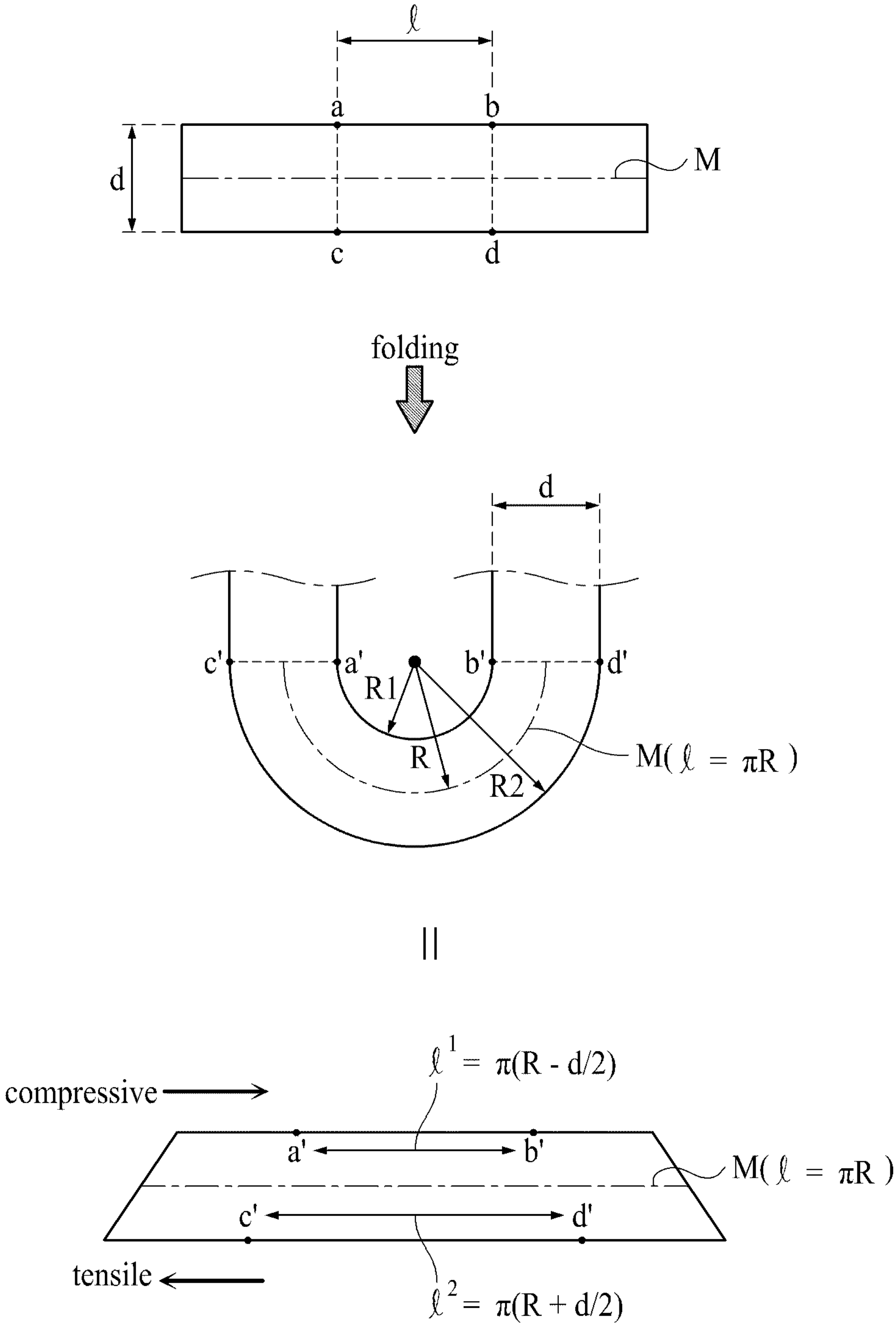
ℓ
a
b
d
M
c
d
folding
d
c'
a'
b'
d'
R1
R
R2
M( ℓ = πR )
||
compressive
ℓ 1 = π(R - d/2)
a'
b'
M( ℓ = πR )
c'
d'
tensile
ℓ 2 = π(R + d/2)

FIG. 2

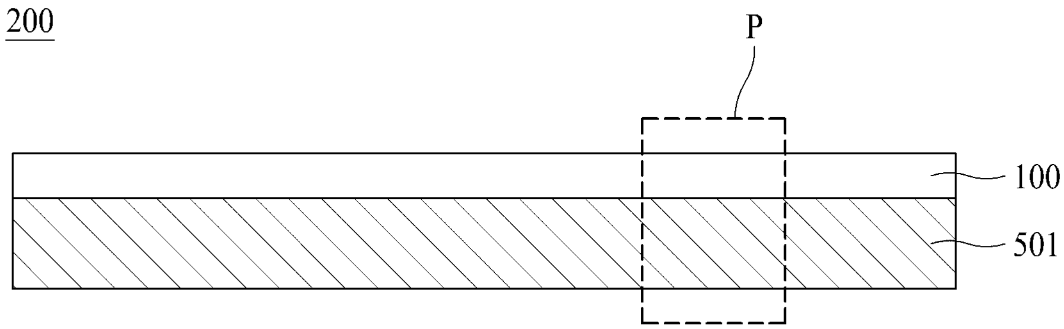
200
P
100
501

FIG. 3

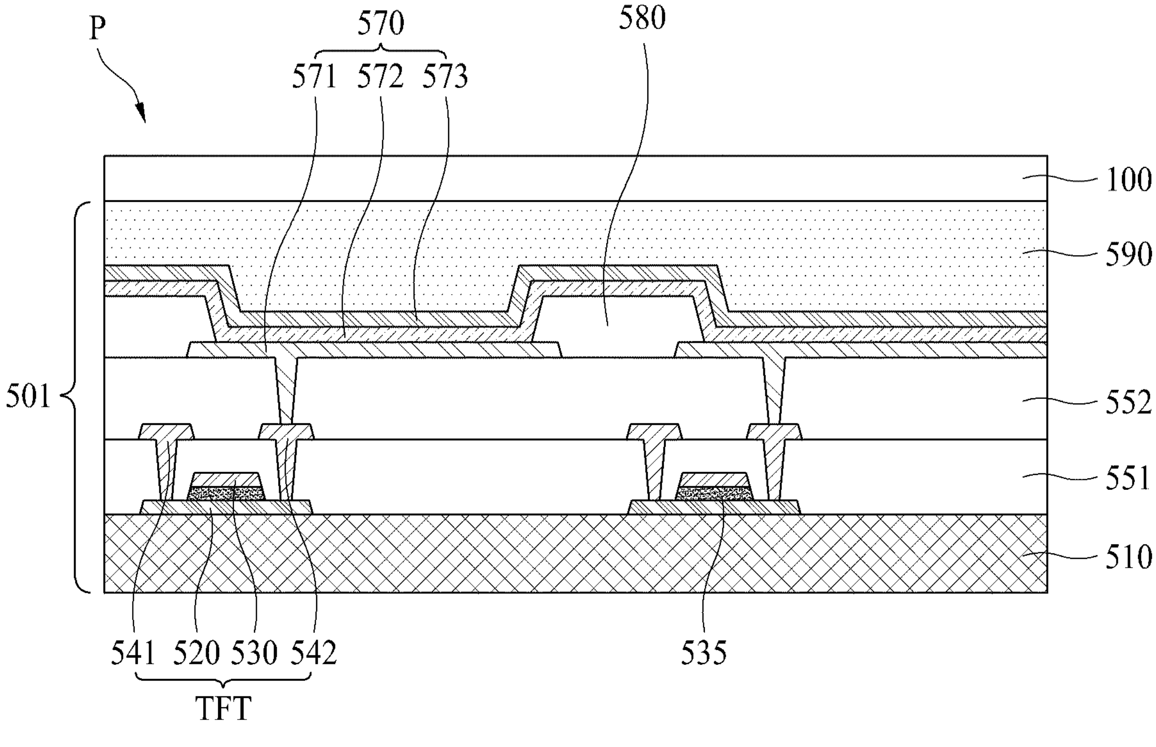
P
570
571
572
573
580
100
590
501
552
551
510
541
520
530
542
535
TFT

## INTERNATIONAL SEARCH REPORT

International application No.
**PCT/KR2021/019823**

**A. CLASSIFICATION OF SUBJECT MATTER**

**C08J 5/18**(2006.01)i; **C08L 79/08**(2006.01)i; **C08G 73/14**(2006.01)i; **C08G 73/10**(2006.01)i; **G02B 1/04**(2006.01)i

According to International Patent Classification (IPC) or to both national classification and IPC

**B. FIELDS SEARCHED**

Minimum documentation searched (classification system followed by classification symbols)

C08J 5/18(2006.01); B32B 27/08(2006.01); B32B 27/28(2006.01); B32B 37/14(2006.01); C08G 73/14(2006.01); C08J 7/04(2006.01); G02B 5/30(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 광학 필름(optical film), 아마이드 반복단위(amide unit), 이미드 반복단위(imide unit), 폴딩 파라미터(folding parameter), 탄성 모듈러스(elastic modulus), 2종류 디아민계 화합물(2 types of diamine compounds), 디안하이드라이드계 화합물(dianhydride compound), 디카르보닐계 화합물(dicarbonyl compound)

**C. DOCUMENTS CONSIDERED TO BE RELEVANT**

| Category* | Citation of document, with indication, where appropriate, of the relevant passages | Relevant to claim No. |
|---|---|---|
| X | KR 10-2021-0020395 A (SKC CO., LTD.) 24 February 2021 (2021-02-24) See paragraphs [0001], [0054], [0067], [0092], [0133], [0134], [0153], [0158] and [0283]; and table 2. | 1-6,13 |
| A | | 7-12 |
| A | US 2017-0023715 A1 (SAMSUNGELECTRONICS CO., LTD. et al.) 26 January 2017 (2017-01-26) See entire document. | 1-13 |
| A | JP 2021-055096 A (SK INNOVATION CO., LTD.) 08 April 2021 (2021-04-08) See entire document. | 1-13 |
| A | US 2020-0147943 A1 (DUPONT ELECTRONICS, INC.) 14 May 2020 (2020-05-14) See entire document. | 1-13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 April 2022** | **12 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.
**PCT/KR2021/019823**

| C. DOCUMENTS CONSIDERED TO BE RELEVANT | | |
|---|---|---|
| Category* | Citation of document, with indication, where appropriate, of the relevant passages | Relevant to claim No. |
| A | KR 10-2018-0112671 A (SKC CO., LTD.) 12 October 2018 (2018-10-12)<br>See entire document. | 1-13 |

Form PCT/ISA/210 (second sheet) (July 2019)

## INTERNATIONAL SEARCH REPORT

International application No.
**PCT/KR2021/019823**

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☑ Claims Nos.: **14**
because they are dependent claims and are not drafted in accordance with the second and third sentences of Rule 6.4(a).

Form PCT/ISA/210 (continuation of first sheet) (July 2019)

**INTERNATIONAL SEARCH REPORT**
**Information on patent family members**

International application No.
**PCT/KR2021/019823**

| Patent document cited in search report | Publication date (day/month/year) | Patent family member(s) | Publication date (day/month/year) |
|---|---|---|---|
| KR 10-2021-0020395 A | 24 February 2021 | None | |
| US 2017-0023715 A1 | 26 January 2017 | KR 10-2017-0011306 A | 02 February 2017 |
| JP 2021-055096 A | 08 April 2021 | KR 10-2147288 B1 | 24 August 2020 |
| | | US 2021-0095082 A1 | 01 April 2021 |
| US 2020-0147943 A1 | 14 May 2020 | KR 10-2021-0091231 A | 21 July 2021 |
| | | KR 10-2021-0091232 A | 21 July 2021 |
| | | US 2020-0147945 A1 | 14 May 2020 |
| KR 10-2018-0112671 A | 12 October 2018 | JP 2019-513887 A | 30 May 2019 |
| | | JP 6843224 B2 | 17 March 2021 |
| | | KR 10-1811253 B1 | 22 December 2017 |
| | | KR 10-1839293 B1 | 19 March 2018 |
| | | KR 10-2017-0116513 A | 19 October 2017 |
| | | KR 10-2116512 B1 | 28 May 2020 |
| | | US 2020-0339769 A1 | 29 October 2020 |

Form PCT/ISA/210 (patent family annex) (July 2019)